# DEMANDE DE BREVET EUROPEEN

(11) **EP 3 343 487 A1**
(43) Date de publication de la demande: **04.07.2018**
(21) Numéro de dépôt: 17209733.9
(22) Date de dépôt: 21.12.2017
(51) Int. Cl.: G06Q 20/34, G06Q 20/40

(54) **PROCÉDÉ DE CONTRÔLE D'HABITUDES D'UTILISATION ET DISPOSITIF ÉLECTRONIQUE APTE À METTRE EN UVRE UN TEL PROCÉDÉ**

(30) Priorité: 30.12.2016 FR 1663558
(71) Demandeur: Oberthur Technologies, 92700 Colombes (FR)
(72) Inventeur: CHAMBEROT, Francis, 92700 COLOMBES (FR); DE OLIVEIRA, Marco, 92700 COLOMBES (FR)
(74) Mandataire: Gevers & Orès

(57) **Abrégé**

La présente invention concerne un procédé de contrôle d'habitudes d'utilisation d'un dispositif électronique (4) comprenant une mémoire sécurisée (10), ledit procédé comprenant: a) une étape (EA) de lecture d'une première (IU1) et d'une deuxième (IU2) information d'utilisation lorsqu'une transaction (TR) est effectuée entre ledit dispositif électronique (4) et un terminal externe (2) ; b) une première étape (EB) d'enregistrement, dans ladite mémoire sécurisée (10) du dispositif électronique (4), d'une première liste (L1) de couples (tₘ) de données, chacun desdits couples (tₘ) comprenant ladite première (IU1) et ladite deuxième (IU2) information d'utilisation ; c) une deuxième étape (EC) d'enregistrement, dans la mémoire sécurisée (10) du dispositif électronique (4), d'une deuxième liste (L2) de compteurs (Cₙ) ; d) une étape (ED) de calcul d'au moins un indicateur (IC) de contrôle d'habitudes d'utilisation du dispositif électronique (4) au moins à partir de la première information d'utilisation (IU1), de la deuxième information d'utilisation (IU2), et/ou d'un compteur (Cₙ) de ladite deuxième liste (L2).

La présente invention concerne en outre un dispositif électronique (4) comprenant : un module (MA) de lecture programmé pour lire une première (IU1) et une deuxième (IU2) information d'utilisation lorsqu'une transaction (TR) est effectuée entre ledit dispositif électronique (4) et un terminal externe (2) ; une mémoire sécurisée (10) comprenant: un premier module (MB) d'enregistrement, pour enregistrer une première liste (L1) de couples (tₘ) de données, chacun desdits couples (tₘ) comprenant ladite première (IU1) et ladite deuxième (IU2) information d'utilisation ; un deuxième module (MC) d'enregistrement pour enregistrer une deuxième liste (L2) de compteurs (Cₙ) ; un module (MD) de calcul programmé pour calculer au moins un indicateur (IC) de contrôle d'habitudes d'utilisation du dispositif électronique (4), au moins à partir de la première information d'utilisation, de la deuxième information d'utilisation et/ou d'un compteur (Cₙ) de ladite deuxième (L2) liste.

## Description

### Arrière-plan de l'invention

La présente invention se situe dans le domaine général des dispositifs électroniques aptes à coopérer avec un terminal externe afin de réaliser une opération, telle qu'une transaction par exemple.

L'invention concerne en particulier un procédé de contrôle d'habitudes d'utilisation d'un dispositif électronique, et un dispositif électronique apte à mettre en oeuvre ledit procédé. L'invention s'applique plus particulièrement, mais de manière non exclusive, aux cartes à puce (ou cartes à microcircuit), conformes par exemple à la norme ISO7816. L'invention vise notamment mais de manière non exclusive l'utilisation d'une carte à puce fonctionnant selon le protocole EMV (pour « Europay Mastercard Visa »).

De manière générale, une carte à puce est conçue pour communiquer avec un dispositif externe à cette carte, autrement appelé terminal ou terminal externe. Ces cartes permettent d'effectuer divers types de transactions, telles que des transactions de paiement ou d'authentification du porteur, par exemple. Les cartes à puce pour applications bancaires (carte de crédit, carte de débit etc.), par exemple, sont aptes à communiquer avec des terminaux de paiement. EMV est le protocole standardisé utilisé majoritairement dans le monde pour sécuriser notamment les transactions de paiement effectuées par des cartes à puce.

Le protocole EMV a été conçu pour diminuer les risques de fraudes lors d'une transaction de paiement. De nombreux mécanismes de sécurité ont récemment été développés afin de sécuriser autant que possible l'usage croissant des cartes à puce, de type EMV notamment.

Suivant le type de carte utilisé, la situation, ou encore le montant considéré, une carte EMV peut fonctionner en ligne ou hors ligne. En mode en ligne, la carte EMV peut communiquer, via le terminal externe, avec l'entité émettrice correspondante (la banque à l'origine de la carte, par exemple) afin de vérifier que la transaction en cours est légitime. En revanche, si la carte EMV fonctionne en mode hors ligne, celle-ci applique des critères de vérification préenregistrés pour décider si la transaction doit être autorisée ou refusée.

Ainsi, il a été développé des cartes à puce EMV aptes à détecter une transaction frauduleuse à partir d'une analyse d'informations correspondant à cette transactions. Ces informations, enregistrées par la carte EMV au moment de la transaction, sont par exemple le destinataire de la transaction, le jour et l'heure de la transaction, ou encore le montant de la transaction s'il s'agit d'une transaction financière.

Lorsque la carte EMV utilisée fonctionne en mode en ligne, ces informations sont cryptées et remontées vers des serveurs bancaires configurés pour réaliser l'analyse de ces informations à l'aide de logiciels d'analyses installés sur ces serveurs. Ces logiciels peuvent accéder à un grand nombre de transactions effectuées et ainsi contrôler les habitudes d'utilisation d'une carte EMV en temps réel, c'est-à-dire au moment où celle-ci est utilisée.

Cependant, lorsque la carte EMV est utilisée en mode hors ligne, l'analyse de ces informations ne peut pas être effectuée en temps réel. Tant que ces informations ne sont pas remontées vers un serveur bancaire configuré pour les analyser, il peut s'écouler un certain délai entre la réalisation d'une transaction par la carte et l'analyse de ses informations d'utilisation. Cet inconvénient pose un problème de sécurité important car la réalisation d'une transaction frauduleuse n'est pas détectable au cours de ce délai, par exemple si la carte EMV est employée par un utilisateur qui n'en est pas le propriétaire.

Les possibilités de suivi des habitudes comportementales d'un porteur d'une carte à puce (ou équivalents) ou des opérations réalisées par cette carte sont aujourd'hui limitées et appellent à de nouveaux mécanismes. Il existe en particulier un besoin d'analyser les informations d'utilisation d'une carte de paiement en mode hors ligne, à l'aide d'une solution évitant de modifier en profondeur les protocoles actuels mis en oeuvre par les dispositifs électroniques et les terminaux externes associés.

Or, il n'existe pas aujourd'hui de mécanisme satisfaisant permettant de déployer ou d'effectuer des analyses d'informations d'une transaction directement sur une carte de paiement EMV effectuant une transaction avec un terminal externe, pour identifier d'éventuelles transactions frauduleuses effectuées à l'aide de cette carte.

### Objet et résumé de l'invention

Afin de pallier ce problème, un objet de la présente l'invention est de proposer un procédé apte à contrôler des habitudes d'utilisation d'un dispositif électronique utilisé pour effectuer une transaction, à partir dudit dispositif électronique seul.

Corrélativement, un objet de la présente invention est de proposer un dispositif électronique configuré pour mettre en oeuvre ce procédé, et apte à détecter une transaction frauduleuse effectuée en mode en ligne et en mode hors ligne.

Un premier aspect de l'invention concerne ainsi un procédé de contrôle d'habitudes d'utilisation d'un dispositif électronique comprenant une mémoire sécurisée, ledit procédé comprenant:
a) une étape de lecture d'une première et d'une deuxième information d'utilisation lorsqu'une transaction est effectuée entre ledit dispositif électronique et un terminal externe ;
b) une première étape d'enregistrement, dans ladite mémoire sécurisée du dispositif électronique, d'une première liste de couples de données, chacun desdits couples comprenant ladite première et ladite deuxième information d'utilisation ;
c) une deuxième étape d'enregistrement, dans la mémoire sécurisée du dispositif électronique, d'une deuxième liste de compteurs ;
d) une étape de calcul d'au moins un indicateur de contrôle d'habitudes d'utilisation du dispositif électronique au moins à partir de la première information d'utilisation, de la deuxième information d'utilisation, et/ou d'un compteur de ladite deuxième liste.

Avantageusement, ce procédé permet de détecter une transaction frauduleuse effectuée en mode hors ligne sans nécessiter d'envoi d'informations à un serveur bancaire.

Avantageusement, ce procédé permet en outre d'enregistrer un nombre limité d'informations d'utilisation d'un dispositif électronique dans une mémoire dudit dispositif électronique.

Avantageusement, ce procédé permet en outre la mise en oeuvre d'un mécanisme de reconnaissance d'habitudes d'un dispositif électronique dont la mémoire est limitée.

Dans un mode particulier de réalisation de l'invention, la première information d'utilisation est une donnée d'identification du terminal externe.

Dans un mode particulier de l'invention, la première étape d'enregistrement enregistre uniquement la deuxième information d'utilisation dans la première liste de couples de données si la première information d'utilisation est comprise dans l'un desdits couples préalablement à l'étape de lecture.

Dans un mode particulier de l'invention, l'étape de calcul est mise en oeuvre lorsque le nombre de couples enregistrés dans la première liste et comprenant une valeur identique de la première information d'utilisation est supérieur à un nombre prédéterminé choisi parmi : 3, 4, 5, 6.

Dans un mode particulier de l'invention, la deuxième information d'utilisation est une information séquentielle.

Dans un autre mode particulier de l'invention, la deuxième information d'utilisation est une information temporelle comprise dans une plage temporelle prédéterminée.

Dans un mode particulier de réalisation de l'invention, lesdits compteurs sont choisis parmi : un compteur de transaction et un accumulateur de transaction d'une plage temporelle prédéterminée du dispositif électronique.

Dans un mode particulier de réalisation de l'invention, la plage temporelle prédéterminée est une plage horaire d'un jour de la semaine.

Dans un mode particulier de réalisation de l'invention, l'étape de calcul calcule une valeur dudit indicateur de contrôle, ladite valeur étant choisie parmi :
- une première information d'utilisation d'au moins un couple enregistré dans la première liste ;
- une deuxième information d'utilisation d'au moins un couple enregistré dans la première liste ;
- une valeur courante d'au moins un desdits compteurs enregistrés dans la deuxième liste ;
- une différence entre une valeur courante d'au moins un desdits compteurs de la deuxième liste et une valeur courante d'un compteur de transaction d'application du dispositif électronique ;
- une estimation d'au moins un rapport entre une valeur courante d'un compteur de transaction d'application du dispositif électronique et une valeur courante d'au moins un desdits compteurs de la deuxième liste.

Dans un mode particulier de réalisation de l'invention, le procédé comprend en outre, successivement à l'étape de calcul :
e) une étape d'envoi de l'indicateur de contrôle calculé à un serveur bancaire dans un message de contrôle ;
f) une étape d'annulation de la transaction par un message d'annulation émis par le serveur bancaire lorsque la valeur de l'indicateur est supérieure à un seuil prédéterminé.

Dans un mode particulier de réalisation de l'invention, la transaction est conforme au protocole EMV.

Un autre aspect de l'invention concerne en outre un programme d'ordinateur comportant des instructions pour l'exécution des étapes d'un procédé selon l'un des modes particuliers de réalisation de l'invention lorsque ledit programme est exécuté par le dispositif électronique.

Un autre aspect de l'invention concerne en outre un support d'enregistrement lisible par un microprocesseur sur lequel est enregistré un programme d'ordinateur comprenant des instructions pour l'exécution des étapes d'un procédé selon l'un des modes particuliers de réalisation de l'invention.

Un autre aspect de l'invention concerne en outre un dispositif électronique comprenant :
- un module de lecture programmé pour lire une première et une deuxième information d'utilisation lorsqu'une transaction est effectuée entre ledit dispositif électronique et un terminal externe ;
- une mémoire sécurisée comprenant :
   ∘ un premier module d'enregistrement, pour enregistrer une première liste de couples de données, chacun desdits couples comprenant ladite première et ladite deuxième information d'utilisation ;
   ∘ un deuxième module d'enregistrement pour enregistrer une deuxième liste de compteurs ;
- un module de calcul programmé pour calculer au moins un indicateur de contrôle d'habitudes d'utilisation du dispositif électronique, au moins à partir de la première information d'utilisation, de la deuxième information d'utilisation et/ou d'un compteur de ladite deuxième liste.

Dans un mode particulier de réalisation de l'invention, le dispositif électronique est une carte à puce.

Dans la présente description et les revendications annexées, on comprendra que l'expression « supérieure à » est utilisée pour désigner une quantité dont la valeur est plus grande ou égale à une autre, tandis que l'expression « inférieure à » est utilisée pour désigner une quantité dont la valeur est plus petite ou égale à une autre.

On comprendra que le calcul d'une différence entre une première quantité et une deuxième quantité désigne la soustraction de cette deuxième quantité par cette première quantité. On comprendra également que le calcul d'un rapport entre une première quantité et une deuxième quantité désigne la division de cette première quantité par cette deuxième quantité.

En outre, on comprendra que les programmes d'ordinateur mentionnés dans le présent exposé peuvent utiliser n'importe quel langage de programmation, et être sous la forme de code source, code objet, ou de code intermédiaire entre code source et code objet, tel que dans une forme partiellement compilée, ou dans n'importe quelle autre forme souhaitable.

De plus, les supports d'enregistrement (ou d'information) mentionnés dans le présent exposé peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette ou un disque dur.

D'autre part, les supports d'enregistrement peuvent correspondre à un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures :
- la **figure 1** représente sous forme d'un organigramme un exemple de coopération entre une carte à puce et un terminal externe conformément au protocole EMV ;
- la **figure 2** représente, de manière schématique, l'architecture matérielle d'une carte à puce conforme à une mise en oeuvre particulière de l'invention ;
- la **figure 3** représente, schématiquement des modules mis en oeuvre par la carte à puce de la figure 2 ;
- la **figure 4** représente, sous forme d'organigramme, les principales étapes d'un procédé de contrôle d'habitudes d'utilisation d'une carte à puce, selon un mode de réalisation de l'invention ;
- la **figure 5** représente un exemple d'une première étape d'enregistrement selon un mode de réalisation de l'invention ;
- la **figure 6** représente un exemple de mise en oeuvre d'étapes d'un procédé de contrôle d'habitudes d'utilisation selon un mode de réalisation de l'invention ;
- la **figure 7** représente, sous forme d'organigramme, des étapes d'un procédé de contrôle d'habitudes d'utilisation d'une carte à puce, selon un mode de réalisation de l'invention.

Naturellement, pour satisfaire des besoins spécifiques, une personne compétente dans le domaine de la technique pourra appliquer des modifications dans la description suivante. Bien qu'elle se réfère à différents modes de réalisation, la présente invention n'est pas limitée à ces modes de réalisation spécifiques, et toutes modifications propres au champ d'application de la présente invention peuvent être considérées comme évidentes pour une personne versée dans l'art de la technique correspondant.

### Description détaillée d'un mode de réalisation

Comme indiqué ci-avant, la présente invention se situe dans le domaine général des dispositifs électroniques aptes à coopérer avec un terminal externe (ou lecteur) afin de réaliser une opération telle qu'une transaction par exemple.

L'invention concerne en particulier l'analyse d'informations relatives à une transaction effectuée par de tels dispositifs électroniques, afin d'identifier de possibles utilisations frauduleuses effectuées par ce dispositif électronique, ou encore de réaliser des traitements en fonction de certains comportements observés au niveau du dispositif électronique.

L'invention repose sur le principe de stocker les informations d'utilisation du dispositif électronique sur ledit dispositif électronique afin d'en réaliser une analyse et de calculer un ou plusieurs indicateur(s) représentatif(s) des habitudes d'utilisation par un utilisateur.

Ces habitudes d'utilisation comprennent par exemple les destinataires, la date, les montants ou encore le nombre des transactions effectuées par le dispositif électronique, en particulier en mode hors ligne.

Le contrôle de ces habitudes d'utilisation permet ainsi de calculer un indicateur de contrôle, dont la comparaison à des valeurs prédéterminées permet de détecter si une transaction effectuée s'écarte des habitudes d'utilisation du dispositif électronique, par exemple en cas de fraude, de vol ou de piratage.

La présente invention est décrite dans l'exposé qui suit dans le cadre d'une carte à puce (conforme par exemple à la norme IS07816) de type EMV, cette carte étant apte à remonter des informations à un terminal externe lors d'une transaction EMV. On comprendra toutefois que d'autres types de protocole peuvent être envisagés dans le cadre de l'invention.

L'invention vise plus généralement un dispositif électronique destiné à coopérer avec un terminal externe pour réaliser une opération, typiquement une transaction (de paiement par exemple). Ce dispositif électronique est en particulier une carte à puce apte à fournir une information de sécurité terminal externe après avoir démarré une transaction avec celui-ci.

La notion de transaction est ici entendue au sens large et comprend par exemple, dans le domaine bancaire, une transaction de paiement ou de transfert. L'invention est décrite ici dans le cadre d'une carte de paiement destinée à réaliser des transactions bancaires. On comprendra que d'autres types de transactions ou opérations sont envisageables dans le cadre de l'invention.

On notera également que, dans les exemples de réalisation qui suivent, la carte à puce coopère en mode contact avec le terminal externe. L'invention s'applique toutefois également au cas où la carte à puce communique en mode sans contact avec le terminal externe.

Sauf indications contraires, les éléments communs ou analogues à plusieurs figures portent les mêmes numéros de références et présentent des caractéristiques identiques ou analogues, de sorte que ces éléments communs ne sont généralement pas à nouveau décrits par souci de simplicité.

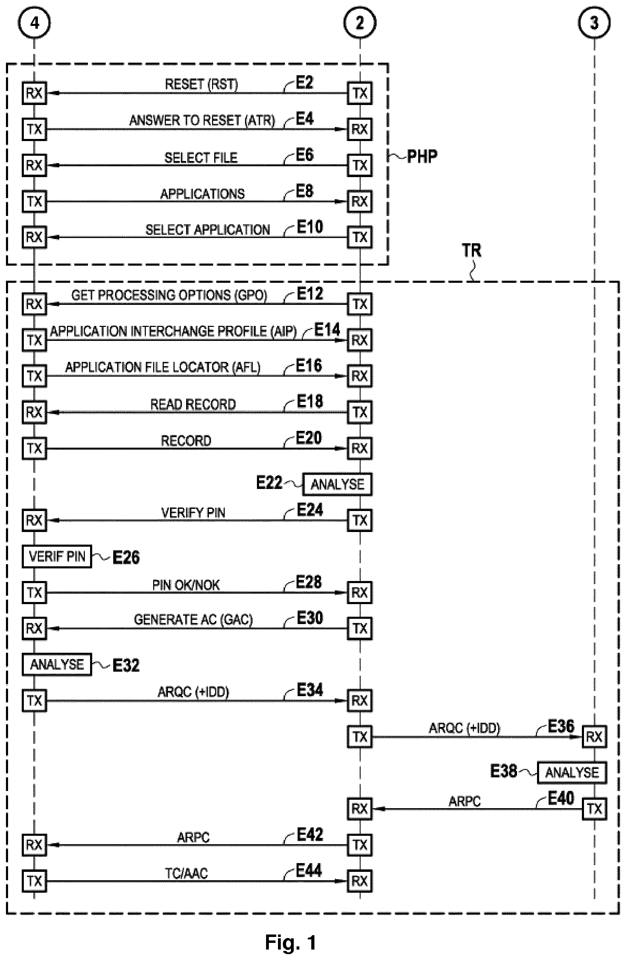

Afin de faciliter la compréhension de l'invention, on décrit à présent, en référence à la **figure 1**, un exemple d'une transaction de paiement conforme au protocole EMV, à l'aide d'une carte à puce 4 coopérant avec un terminal externe 2.

Selon un mode de réalisation de l'invention, le terminal externe 2 peut, en outre, être configuré pour communiquer avec un serveur bancaire 3.

Dans cet exemple, la carte à puce 4 est une carte de paiement et le terminal externe 2 est un terminal de paiement appartenant à un marchand.

Une carte à puce EMV de paiement contient généralement différentes applications bancaires permettant par exemple de fonctionner en mode « carte de crédit » ou « carte de débit » dans un point de vente ou encore d'interagir avec un guichet automatique bancaire.

Le protocole EMV comprend une phase préliminaire PHP destinée à préparer la carte à puce 4 et le terminal externe 2 à la mise en oeuvre à suivre de la transaction TR elle-même. Différents messages conformes au protocole EMV sont échangés entre la carte à puce 4 et le terminal externe 2.

Plus précisément, lors de la phase préliminaire PHP, le terminal externe 2 envoie (E2) tout d'abord un signal RESET (RST) à la carte à puce 4. La carte à puce 4 répond (E4) à l'aide d'un message ANSWER TO RESET (ATR).

Une fois ce premier dialogue effectué, le terminal externe 2 tente de choisir l'application appropriée sur la carte à puce 4. Pour ce faire, le terminal externe 2 envoie (E6) à la carte 4 une commande SELECT FILE afin de demander à la carte de paiement 1 les applications que cette dernière est capable d'exécuter. Cette commande SELECT FILE contient typiquement en paramètre l'identifiant d'application (AID pour « Application Identifier ») « 1 PAY.SYS.DDF01 ». En réponse, la carte 1 fournit (E8) via la commande « read record » une liste des différentes applications qu'elle peut mettre en oeuvre.

Le porteur peut alors sélectionner via le terminal externe 2 le mode de transaction souhaité, déclenchant ainsi l'envoi (E10) vers la carte 4 d'une commande SELECT APPLICATION avec en paramètre l'identifiant AID de l'application sélectionnée. A noter qu'il existe divers variantes pour sélectionner l'application appropriée dans la carte à puce 4.

Le terminal externe 2 envoie (E10) en outre une commande GET PROCESSING OPTIONS (GPO) à la carte à puce 4 afin d'initier le début de la transaction. L'envoi de cette commande GPO marque le début de la transaction EMV.

Au cours de cette transaction TR, la carte à puce 4 envoie (E14) au terminal externe 2 une première série d'informations, telles que l'AIP (Application Interchange Profile) qui indique au terminal externe 2 les différentes opérations à faire pour mener à bien une transaction. La carte 4 envoie (E16) également un message AFL (Application File Locator) qui indique la liste des données disponibles au niveau de l'application dans la carte 4 et que le terminal externe 2 doit aller lire pour pouvoir réaliser la transaction TR. Le terminal externe 2 lit (E18-E20) ainsi les informations spécifiées dans l'AFL. Pour ce faire, le terminal externe 2 envoie (E18) une ou plusieurs commandes de lecture READ RECORD à la carte à puce 4 et reçoit (E20) en retour les informations demandées (appelés RECORDS).

A noter que les étapes E14 et E16 peuvent être réalisées au cours de l'envoi d'un même message depuis la carte à puce 4.

Les informations lues (E18-E20) par le terminal externe 2 dans la carte 4 comprennent par exemple la date d'expiration de la carte à puce 4, le numéro de compte associé, une signature numérique pour authentifier la carte 4, des paramètres de contrôle à utiliser par la suite pour réaliser la transaction, ou encore des listes d'objets dites listes CDOL (pour Card Data Object List).

Selon un mode préféré de réalisation de l'invention, les informations lues par la carte 4 dans le terminal externe 2 comprennent des informations d'utilisation. Lorsqu'une transaction TR est effectuée entre la carte 4 et le terminal externe 2, la carte 4 lit une donnée d'identification MN du terminal externe 2 permettant d'identifier ce terminal externe 2, ou encore une information temporelle de la transaction TR. Ladite information temporelle peut être une date ou une estampille temporelle, et peut comprendre le jour et l'heure à laquelle la transaction TR est réalisée entre la carte 4 et le terminal externe 2.

Dans cet exemple, le terminal externe 2 réalise (E22) ensuite une étape d'analyse à partir des informations fournies (E20) par la carte à puce 4. Si l'authentification associée à la carte à puce 4 échoue, ou encore si une anomalie est détectée, le terminal externe 2 peut refuser la transaction. On suppose ici que l'analyse E22 est passée avec succès.

Le protocole EMV peut se poursuivre avec une phase d'authentification du porteur de la carte à puce 4 selon l'une des méthodes listées et supportées par ladite carte. Le terminal externe 2 détermine le procédé d'authentification du porteur à appliquer en fonction des informations précédemment reçues dans les paramètres de contrôle.

Dans cet exemple, le terminal externe 2 envoie (E24) à la carte à puce 4 une requête VERIFY de vérification du code PIN saisi par le porteur. Le porteur est invité à fournir son code PIN, et la carte à puce 4 compare (E26) alors le code PIN fourni avec le code PIN authentique inclus dans sa mémoire et en déduit si le porteur est authentique ou non.

Si le code PIN saisi est bon, la carte à puce 4 envoie (E28) un message OK de type 0x9000 au terminal. Dans le cas contraire, la carte 4 envoie (E28) un message de refus de type Ox63Cx au terminal, dans lequel x est le nombre de tentatives de code PIN restantes avant que la carte 4 bloque la transaction en cours (et les transactions à venir). On ne s'intéresse ici qu'au cas d'une vérification de code PIN hors ligne, c'est-à-dire sans que le terminal externe 2 fasse appel à l'émetteur de la carte dans le processus de vérification du code PIN, bien que cela soit également possible.

Une fois le porteur authentifié, le protocole EMV se poursuit avec une phase de vérification de la transaction. Plus précisément, le terminal externe 2 génère puis envoie (E28) à la carte 4 une commande GAC (pour GENERATE AC). Cette commande contient différentes données demandées préalablement par la carte à puce 4 dans une liste CDOL reçue à l'étape E20 par le terminal externe 2. Typiquement, la commande GAC contient des informations telles que le montant de la transaction en cours, la devise utilisée, le type de transaction, etc.

En réponse à la commande GAC, la carte 4 réalise (E32) une étape d'analyse comprenant un certain nombre de vérifications de critères. Le nombre et la nature de ces vérifications ne sont pas normalisés par le protocole EMV et peuvent varier selon le cas.

A l'issue de l'analyse E32, la carte à puce 4 répond au terminal externe 2 en envoyant (E34) un cryptogramme (ou certificat cryptographique) qui comprend un code d'authentification de message (ou MAC pour Message Authentification Code), ce dernier étant typiquement crypté à partir d'une clé cryptographique mémorisée dans la carte à puce 4. La réponse de la carte dépend notamment du paramétrage de la carte 4 effectué par la banque émettrice.

Chacun des messages ci-dessus échangés selon le protocole EMV pendant la transaction TR, en particulier entre la carte à puce 4 et le terminal externe 2, constitue des exemples de messages de transaction au sens de l'invention.

Il convient de rappeler ici que le déroulement du protocole EMV décrit ci-dessus en référence à la **figure 1** ne constitue qu'un exemple non limitatif. Le protocole EMV offre en effet de nombreuses alternatives. Il incombe aux intégrateurs de faire les choix nécessaires pour adapter l'exécution du protocole selon les besoins (méthode d'authentification du porteur, transaction en ligne ou hors ligne etc.).

Selon un mode de réalisation de l'invention, une communication entre le terminal externe 2 et un serveur bancaire 3 peut également être réalisée. Lorsque cette communication est réalisée, des messages conformes au protocole EMV sont échangés entre la carte à puce 4, le terminal externe 2 et (dans cet exemple) le serveur bancaire 3 au cours de la phase PHP puis de la transaction TR.

Dans cet exemple, la carte à puce 4 envoie (E34) un cryptogramme ARQC (Autorisation Request Cryptogram) indiquant que la carte 4 souhaite effectuer une transaction en ligne avec le serveur bancaire 3 de l'émetteur de la carte. La carte à puce 4 peut en outre envoyer (E34) le cas échéant des informations IDD (pour Issuer Discretionnary Data) au terminal externe 2 en plus du cryptogramme.

Le terminal externe 2 transmet (E36) ainsi le cryptogramme ARQC (et le cas échéant les informations IDD) au serveur bancaire 3 au niveau duquel est réalisé (E38) une nouvelle analyse à partir des informations reçues. Cette analyse E38 comprend typiquement un certain nombre de vérifications afin de s'assurer que la transaction est valide. Le terminal externe 2 reçoit (E40) en réponse un message crypté ARPC indiquant la décision de l'émetteur. Le terminal externe 2 transmet (E42) ce message ARPC à la carte à puce 4 afin de lui indiquer la décision prise par l'émetteur.

Si, dans cet exemple, la carte 4 accepte la transaction, celle-ci envoie (E44) en réponse un cryptogramme de type TC (transaction acceptée) au terminal externe 2. Dans le cas contraire, la carte 4 envoie (E44) un cryptogramme de type AAC indiquant le refus de la transaction.

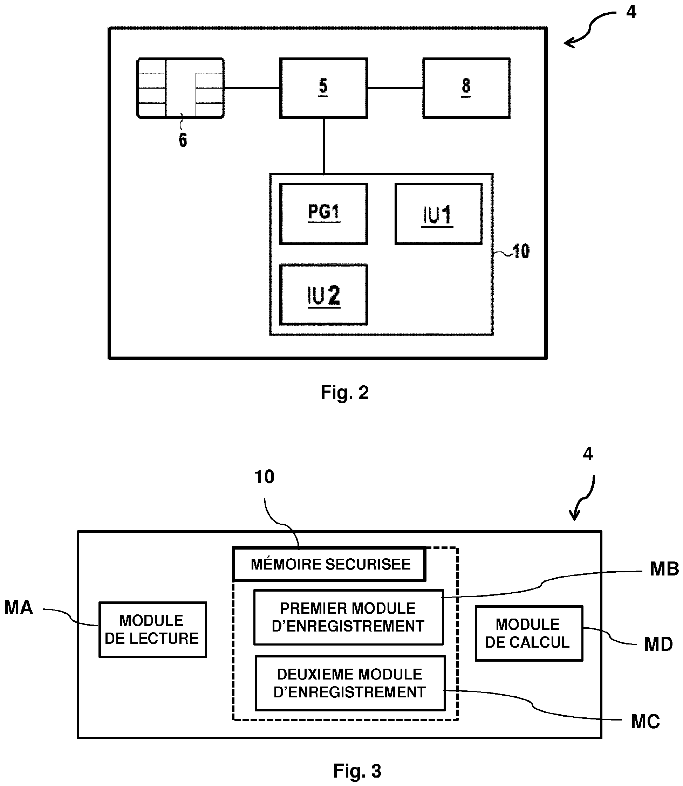

La **figure 2** représente, de manière schématique, l'architecture matérielle d'une carte à puce 4 conforme à un mode de réalisation particulier de l'invention. La carte 4 est dans cet exemple une carte EMV conforme à la norme ISO7816.

Plus particulièrement, la carte à puce 4 comprend ici un microprocesseur 5 couplé à des contacts externes 6 (ports d'entrées/sorties), une mémoire volatile réinscriptible (de type RAM) 8 et une mémoire non volatile réinscriptible 10 (de type Flash par exemple). La carte 4 peut également comprendre une mémoire morte (de type ROM) non représentée ici. Le microprocesseur 5 est apte, via les contacts externes 6, à communiquer par contact avec un terminal externe 2 approprié, un terminal de paiement par exemple. On comprendra toutefois que l'invention peut s'appliquer également aux cartes à puce communiquant en mode sans contact.

Les contacts externes 6 constituent un module d'interface permettant à la carte à puce 4 (et plus particulièrement au microprocesseur 5) d'établir une communication, par contact dans cet exemple, avec une entité externe telle qu'un terminal externe 2. On comprendra que d'autres types de module d'interface peuvent toutefois être envisagés comme un module d'interface permettant d'établir une communication sans contact (comportant une antenne radiofréquence par exemple) entre la carte à puce et un terminal externe.

La carte à puce 4 comprend en outre une mémoire sécurisée 10 qui constitue un support d'enregistrement (ou d'information) conforme à un mode de réalisation de l'invention. Ce support d'enregistrement est lisible par la carte à puce 4, et sur lequel est enregistré un programme d'ordinateur PG1 conforme à un mode de réalisation de l'invention.

Le programme PG1 comporte des instructions pour l'exécution des étapes d'un procédé selon un mode de réalisation de l'invention. De manière non limitative, ces étapes peuvent comprendre par exemple des étapes de lecture, d'enregistrement ou de calcul. Une étape de procédé d'envoi de données peut également être stockée dans la mémoire sécurisée 10, conformément à un mode de réalisation de l'invention.

On considère ici que la mémoire 10 est sécurisée, en faisant appel à un mécanisme de sécurité classique bien connu de l'homme du métier et qui ne sera donc pas décrit ici.

Selon un mode de réalisation de l'invention, la mémoire sécurisée 10 comprend en outre un ou plusieurs modules d'enregistrement aptes à enregistrer des informations d'utilisation IU1 et IU2 de la carte à puce 4. Ces informations d'utilisation peuvent être enregistrées à l'aide d'instructions exécutées par le programme PG1.

Selon un mode de réalisation de l'invention, les informations d'utilisation IU1 et IU2 sont enregistrées sous la forme de couples de données ou de compteurs, comme décrit ci-après. En outre, la mémoire sécurisée 10 est configurée pour enregistrer des données sous la forme de listes, par exemple sous la forme d'une liste à une entrée ou d'une table à deux entrées.

La **figure 3** représente schématiquement des modules pouvant être mis en oeuvre par le microprocesseur 5 sur une carte à puce 4, lorsque le programme PG1 est exécuté.

Selon un mode de réalisation de l'invention, la carte 4 comprend un module MA de lecture programmé pour lire une ou plusieurs informations d'utilisation lorsqu'une transaction est effectuée entre la carte 4 et un terminal externe. La carte 4 comprend en outre une mémoire sécurisée 10 et un module de calcul MD programmé pour calculer un ou plusieurs indicateurs à partir de données enregistrées dans ladite mémoire sécurisée 10. Ces données enregistrées comprennent par exemple les informations d'utilisation IU1 et IU2.

Selon un mode de réalisation de l'invention, la mémoire sécurisée 10 de la carte 4 comprend en outre plusieurs modules d'enregistrement, parmi lesquels un premier module MB d'enregistrement et un deuxième module MC d'enregistrement.

Selon un mode de réalisation de l'invention, le premier module MB d'enregistrement et le deuxième module MC d'enregistrement peuvent être un même module d'enregistrement.

Selon un mode de réalisation de l'invention, la carte 4 peut comprendre d'autres modules ici non représentés, par exemple un module de détection d'une transaction EMV, un module d'exécution permettant le démarrage d'une transaction EMV, ou encore un module de communication apte à envoyer des informations à un serveur bancaire 3. Ledit module de détection peut comprendre un module de traitement apte à détecter un évènement à partir d'une commande reçue d'une entité externe (telle que le terminal externe 2) par le module d'interface 6 de la carte à puce 4. Cette commande est par exemple reçue par la carte à puce 4 lors d'une transaction avec un terminal externe 2, cette commande étant reçue du terminal externe via les contacts externes 6.

En outre, la carte 4 peut comprendre un module de commande apte à collaborer avec ce module de communication, et configuré pour annuler une transaction TR effectuée par la carte 4.

On comprendra que les modules précédemment décrits peuvent être exécutés à l'aide du programme PG1 que comporte le microprocesseur 5.

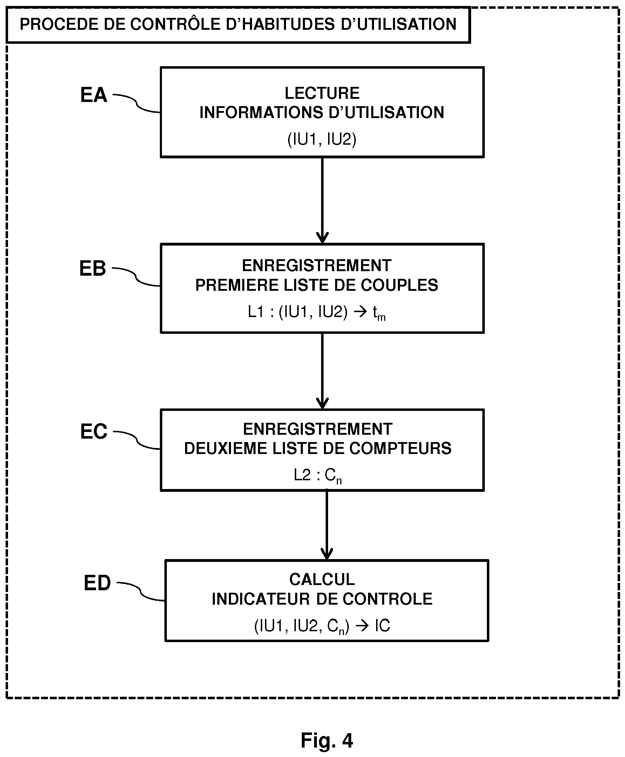

Une mise en oeuvre particulière de l'invention est à présent décrite en référence à la **figure 4** qui représente, sous forme d'organigramme, les principales étapes d'un procédé de contrôle d'habitudes d'utilisation d'une carte à puce 4 selon un mode de réalisation de l'invention.

Une carte à puce 4 est utilisée pour effectuer une transaction TR avec un terminal externe 2. Lors de cette transaction, la carte 4 lit à partir du terminal externe 2 une pluralité de données au cours d'une étape EA de lecture. Les données lues par la carte peuvent comprendre des informations d'utilisation comprenant par exemple le montant de la transaction TR, le « type » de la transaction TR, ou encore la date de la transaction TR. Ces informations d'utilisation peuvent également comprendre une donnée d'identification MN du terminal externe 2 , ou une donnée d'un identifiant du commerçant (merchant name) par exemple pour ne pas être tributaire du terminal même sur lequel se fait la transaction.

Cette donnée d'identification MN peut comprendre le code « pays » du terminal externe 2, les résultats de vérification (TVR) du terminal externe 2, ou encore le code « devise » du terminal externe 2. En particulier, deux informations d'utilisation IU1 et IU2 sont lisibles par la carte 4 lors d'une transaction TR donnée.

Successivement à l'étape EA de lecture, une étape EB d'enregistrement des informations d'utilisations IU1 et IU2 est mise en oeuvre dans une mémoire sécurisée 10 de la carte 4. Selon un mode de réalisation de l'invention, ces informations d'utilisation IU1 et IU2 sont enregistrées sous la forme d'une première liste L1 de couples tₘ de données, où m désigne le nombre de couples enregistrés.

Par exemple, cette étape EB d'enregistrement permet à la carte 4 d'enregistrer une donnée d'identification MN du terminal externe 2 dans la mémoire sécurisée 10 sous la forme d'une première information d'utilisation IU1. Selon un autre exemple, la carte 4 peut enregistrer une information séquentielle telle qu'un compteur de transaction, dans ladite mémoire sécurisée 10, sous la forme d'une deuxième information d'utilisation IU2. Selon un autre exemple, cette deuxième information d'utilisation IU2 peut être une information temporelle, par exemple la date de la transaction TR, qui est comprise dans une plage temporelle (Iₙ) prédéterminée. En outre, la première information d'utilisation IU1 et/ou la deuxième information d'utilisation IU2 peuvent comprendre un compteur Cₙ enregistré dans la mémoire sécurisée 10 de la carte 4 au cours de l'étape EB d'enregistrement.

Dans l'exemple d'une carte EMV conforme à la norme ISO7816, un compteur Cₙ peut ainsi être un compteur de transaction ATC qui totalise le nombre de transactions effectuées par cette carte, avec ou sans succès, depuis sa mise en service. Un compteur Cₙ de type ATC est ainsi incrémenté après chaque envoi d'une commande GPO par le terminal externe 2 lorsqu'une transaction TR est effectuée.

Successivement à la première étape EB de lecture, une deuxième étape EC d'enregistrement est mise en oeuvre. Cette deuxième étape EC d'enregistrement enregistre, dans une mémoire sécurisée 10 de la carte 4, une deuxième liste L2 comprenant un ou plusieurs compteurs Cₙ. De manière non limitative, la première étape EB et la deuxième étape EC d'enregistrement sont mises en oeuvres séparément.

Successivement à la deuxième étape EC d'enregistrement, une étape ED de calcul est mise en oeuvre.

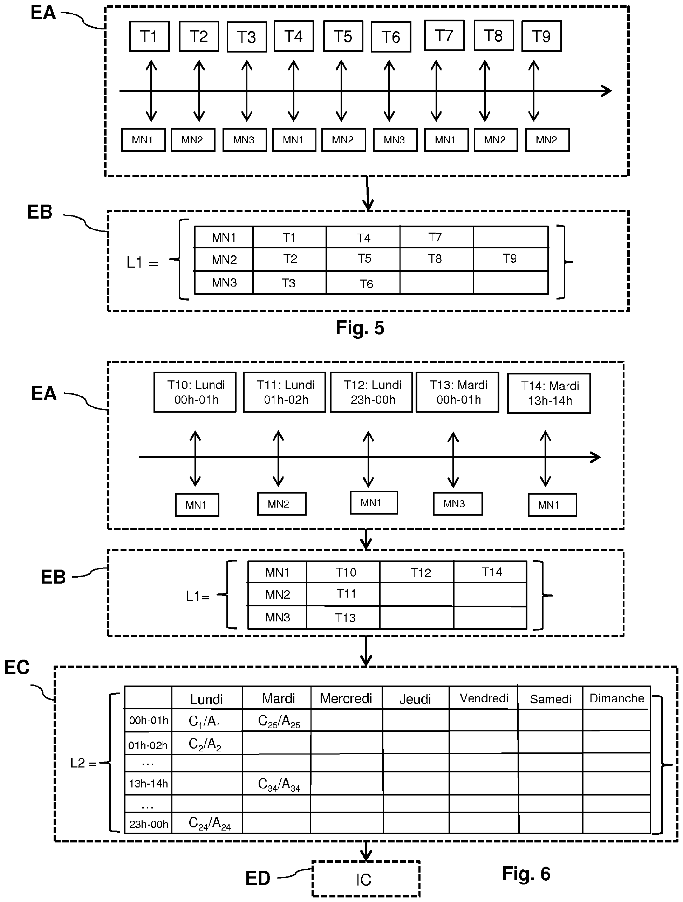

La **figure 5** représente un exemple de mise en oeuvre d'une étape EA de lecture et d'une première étape EB d'enregistrement, dans la mémoire sécurisée 10 de la carte à puce 4, d'une première liste L1 de de données selon un mode de réalisation de l'invention.

Dans l'exemple représenté, neuf transactions {T1,T2,T3,T4,T5,T6,T7,T8,T9} sont effectuées à des dates successives différentes entre la carte 4 et trois terminaux externes MN1, MN2 et MN3. Les données d'identification de ces trois terminaux externes ne sont pas enregistrées préalablement. En général, c'est le cas lorsque la carte 4 est utilisée pour la première fois pour effectuer une transaction avec un nouveau marchand. En outre, ces trois terminaux externes peuvent appartenir à un même marchand ou à des marchands différents, et sont désignés par différentes données d'identifications.

Dans cet exemple, une carte 4 est utilisée pour effectuer, successivement : une transaction avec MN1 en une date T1, une transaction avec MN2 en une date T2, une transaction avec MN3 en une date T3, une transaction avec MN1 en une date T4, une transaction avec MN2 en une date T5, une transaction avec MN3 en une date T6, une transaction avec MN1 en une date T7, une transaction avec MN2 en une date T8, puis une transaction avec MN2 en une date T9.

Au cours de l'étape EA de lecture, la carte à puce 4 lit ces informations, et les enregistre sous la forme d'une première liste L1 dans la mémoire sécurisée 10 au cours de l'étape EB d'enregistrement.

Suite à l'étape EA de lecture, une première liste L1 comprenant les neuf couples de données {t₁,t₂,t₃,t₄,t₅,t₆,t₇,t₈,t₉} est enregistrée au cours de la première étape EB d'enregistrement. Comme représenté sur la **figure 5**, ces neuf couples sont enregistrés dans la première liste L1, sous la forme d'une table à deux entrées, l'une de ces deux entrées correspondant aux données d'identification des terminaux externes, et l'autre de ces deux entrées correspondant aux dates au cours desquelles la carte 4 a été utilisée pour réaliser une transaction avec chacun de ces terminaux externes.

Les couples de données tₘ correspondants sont ainsi enregistrés dans la première liste L1 de manière ergonomique sous la forme de trois vecteurs de données {(MN1, T1, T4, T7), (MN2, T2, T5, T8, T9), (MN3, T3, T6)}, chaque vecteur de données comprenant une donnée d'identification d'un des terminaux externes et toutes les dates successives des transactions effectuées entre la carte 4 et ces terminaux externes. Les vecteurs de données enregistrés comprennent ainsi un historique de toutes les dates auxquelles une transaction effectuées.

En variante, les neuf couples de données {t₁,t₂,t₃,t₄,t₅,t₆,t₇,t₈,t₉} peuvent être enregistrés dans la première liste L1 sous la forme d'une suite {(MN1 ,T1), (MN2, T2), (MN3, T3), (MN1, T4), (MN2, T5), (MN3, T6), (MN1, T7), (MN2, T8), (MN2, T9)}, chaque couple reprenant chacun la donnée d'identification du terminal externe et la date des transactions effectuées.

L'enregistrement de la première liste L1 sous la forme d'une table à deux entrées au cours de la première étape EB d'enregistrement permet de limiter l'utilisation de la mémoire sécurisée 10 en n'enregistrant qu'une seule fois la donnée d'identification d'un terminal externe avec lequel une transaction est effectuée.

En outre, la première étape EB d'enregistrement peut enregistrer uniquement la deuxième information d'utilisation IU2 dans la première liste L1 de couples tₘ de données si la première information d'utilisation IU1 est comprise dans l'un desdits couples tₘ préalablement à l'étape EA de lecture. Lorsque la première information d'utilisation IU1 est une donnée d'utilisation MN d'un terminal externe 2 avec lequel la carte 4 effectue une transaction TR, ceci permet de réduire l'utilisation de la mémoire sécurisée 10 lorsque plusieurs transactions sont effectuées avec ce même terminal.

Non représentées, une deuxième étape EC d'enregistrement et une étape ED de calcul sont mises en oeuvres suite à la première étape EB d'enregistrement.

En particulier, la deuxième étape EC d'enregistrement est mise en oeuvre dans une mémoire sécurisée 10 de la carte 4. Cette deuxième étape EC d'enregistrement vise à enregistrer, dans la mémoire 10, une deuxième liste L2 de compteurs Cₙ.

La **figure 6** représente un exemple de mise en oeuvre de l'invention, au cours de laquelle une deuxième liste L2 de compteurs Cₙ est enregistrée lors d'une deuxième étape EC d'enregistrement. Cette deuxième étape EC d'enregistrement est successive à l'enregistrement de la première liste L1 de couples tₘ de données lors de la première étape EB d'enregistrement. L'étape EC peut être réalisée, par exemple, lorsque la deuxième information d'utilisation IU2 est une information temporelle comprise dans une plage temporelle Iₙ prédéterminée.

Selon un mode de réalisation de l'invention, une plage temporelle Iₙ prédéterminée est une plage horaire d'un jour de la semaine enregistré dans une mémoire sécurisée 10 de la carte 4.

On comprendra qu'une pluralité de plages temporelles Iₙ est prédéterminée, et que ladite pluralité de plages temporelles peut être enregistrée dans une mémoire sécurisée 10 de la carte 4 préalablement à la mise en service de cette carte. Cette pluralité de plages temporelles Iₙ peut comprendre une liste d'années, une liste de mois, une liste de jours, une liste d'heures ou toute liste d'intervalles de temps.

En particulier, plusieurs plages temporelles Iₙ prédéterminées peuvent être enregistrées préalablement dans une mémoire sécurisée 10 de la carte 4 sous la forme d'une table à deux entrées. Dans cet exemple, l'une de ces deux entrées correspond à un jour de la semaine choisi parmi : lundi, mardi, mercredi, jeudi, vendredi, samedi et dimanche. L'autre de ces deux entrées correspond à l'une des vingt-quatre plages horaires choisie parmi 00h-01 h, 01h-02h, ..., 23h-00h. La pluralité de plages temporelles Iₙ prédéterminée peut également être enregistrée sous la forme d'une seule liste comprenant 24 x 7 plages horaires I₁, I₂, ... I₁₆₈.

Dans l'exemple représenté sur la **figure 6****,** cinq transactions sont effectuées entre la carte 4 et trois terminaux externes à des dates successives différentes. Lesdits trois terminaux externes sont identifiés par des données d'identification MN1, MN2 et MN3. Les trois premières transactions sont effectuées lors de trois premières dates T10, T11 et T12 correspondant à un lundi entre 00h et 01h, à un lundi entre 01h et 02h, et à un lundi entre 23h et 00h. Les deux dernières transactions sont effectuées lors de deux dates T13 et T14 correspondant à un mardi entre 00h et 01h, et à un mardi entre 13h et 14h.

Dans cet exemple, et successivement à l'étape EA de lecture, la première étape EB d'enregistrement enregistre une première liste L1 de couples de données tₘ correspondant à {(MN1,T10,T12,T14), (MN2,T11), (MN3,T13)}, sous la forme d'une table à deux entrées.

Successivement à la première étape EB d'enregistrement, une deuxième étape EC d'enregistrement enregistre une deuxième liste L2 de compteurs Cₙ dans une mémoire sécurisée 10 de la carte 4.

De manière non limitative, un compteur Cₙ peut être tout type de compteur apte à compter une ou plusieurs informations associées aux transactions effectuées par la carte 4, comme par exemple la somme des montants de ces transactions.

Dans l'exemple représenté, les plages temporelles Iₙ comprennent l'un des sept jours de la semaine et l'une des vingt-quatre plages horaires de la journée, chacune des cinq transactions génère l'enregistrement, dans la mémoire sécurisée 10 de la carte 4, d'un compteur Cₙ associé à la plage temporelle Iₙ durant laquelle cette transaction a été effectuée. Chaque compteur Cₙ enregistre ainsi le cumul du nombre de transactions effectuées dans la plage temporelle Iₙ correspondante.

Selon un mode de réalisation de l'invention, un compteur Cₙ peut être choisi parmi différents types de compteurs, par exemple un compteur Aₙ de transactions ATC ou un accumulateur de transaction d'une plage temporelle Iₙ, qui totalise le nombre de transactions effectuées par la carte 4 dans la plage temporelle Iₙ.

Lors de la deuxième étape EC d'enregistrement, la transaction effectuée à la date T10 mène à l'enregistrement d'un compteur C₁, la transaction de la date T11 mène à l'enregistrement d'un compteur C₂, la transaction de la date T12 mène à l'enregistrement d'un compteur C₂₄, la transaction de la date T13 mène à l'enregistrement d'un compteur C₂₅, et la transaction de la date T14 mène l'enregistrement d'un compteur C₃₄. Pour ces cinq transactions, la deuxième liste L2 de compteurs Cₙ peut ainsi être constituée d'une table à deux entrées comprenant les compteurs C₁, C₂, C₂₄, C₂₅, C₃₄.

Suite à la deuxième étape EC d'enregistrement, une étape ED de calcul est mise en oeuvre pour calculer au moins un indicateur IC de contrôle d'habitudes d'utilisation du dispositif électronique 4 au moins à partir des données enregistrées dans la mémoire sécurisée 10 de la carte 4.

Selon un mode de réalisation de l'invention, les données enregistrées utilisées pour calculer l'indicateur IC de contrôle peut comprendre une première information d'utilisation IU1 et/ou une deuxième information d'utilisation IU2 comprise(s) dans la liste L1, et/ou un ou plusieurs compteur(s) Cₙ compris dans la deuxième liste L2. Une valeur de l'indicateur de contrôle IC peut être calculée selon différentes règles.

Dans un premier exemple, l'indicateur de contrôle IC peut être la première information d'utilisation IU1 et/ou la deuxième information d'utilisation IU2, comprise(s) par exemple dans l'un des couple tₘ enregistrés dans la première liste L1. Par exemple, ceci permet de contrôler les habitudes d'utilisation d'une carte à puce 4 utilisée pour effectuer des transactions par rapport à un destinataire récurrent de transactions.

L'indicateur de contrôle IC peut ainsi être utilisé pour contrôler les habitudes d'utilisation de la carte à puce 4 en analysant, par exemple, une donnée d'identification MN du terminal externe 2, une information séquentielle telle qu'un compteur de transactions effectuées par ladite carte 4, ou encore une information temporelle associée à l'utilisation de ladite carte 4, telle qu'une date d'une transaction TR effectuée par cette carte 4.

Dans un autre exemple, l'indicateur de contrôle IC peut être une valeur courante d'un compteur Cₙ enregistré dans la deuxième liste L2. Lorsque le compteur Cₙ correspond à une plage temporelle Iₙ prédéterminée, l'indicateur de contrôle IC permet de contrôler les habitudes d'utilisation de la carte à puce 4 sur cette plage temporelle Iₙ prédéterminée. Ainsi, dans l'exemple représenté sur la **figure 6**, la valeur d'un indicateur de contrôle IC égale à C₃₄ permet d'en déduire le nombre de transactions effectuées par la carte 4 les mardis entre 13h et 14h.

Dans un autre exemple, l'indicateur de contrôle IC peut être une différence Dₙ entre une valeur courante d'un compteur Aₜₒₜₐₗ du nombre total de transactions ATC et la valeur courante d'un compteur Aₙ de transactions ATC de la carte 4 calculée lors de la dernière transaction réalisée dans la plage temporelle Iₙ. Le calcul d'une valeur d'un indicateur de contrôle IC dont la valeur est égale à une différence Dₙ entre un compteur Aₙ de la deuxième liste L2 et une valeur courante Aₜₒₜₐₗ du nombre total de transactions ATC d'un compteur de transaction d'application ATC de la carte 4 permet de contrôler l'apparition de nouvelles habitudes d'utilisation de cette carte 4 sur la plage temporelle Iₙ prédéterminée correspondant audit compteur Cₙ.

Ainsi, dans l'exemple représenté sur la **figure 6**, une valeur d'un indicateur de contrôle IC égale à la différence D₃₄ = Aₜₒₜₐₗ - A₃₄ permet d'en déduire combien de transactions ont été effectuées par la carte 4 depuis le dernier paiement de la tranche horaire mardi entre 13h et 14h et la transaction la plus récente effectuée par cette carte 4. Par exemple, si valeur courante Aₜₒₜₐₗ du nombre total de transactions ATC d'un compteur de transaction d'application ATC est égale à douze et si la valeur du compteur A₃₄ est égale à six, il en résulte que six transactions ont été effectuées par la carte 4 depuis le mardi le plus récent, entre 13h et 14h.

Dans un autre exemple, l'indicateur de contrôle IC peut être une estimation d'au moins un rapport Rₙ entre une valeur courante d'un compteur de transaction d'application ATC de la carte 4 et un compteur Cₙ.

Le calcul d'une valeur d'un indicateur de contrôle IC dont la valeur est égale à une estimation d'un rapport Rₙ entre un compteur Cₙ de la deuxième liste L2 et une valeur courante d'un compteur de transaction d'application ATC de la carte 4 permet de contrôler quelles sont les plages temporelles Iₙ prédéterminées au cours desquelles la carte 4 est fréquemment utilisée pour effectuer une transaction.

Ainsi, dans l'exemple représenté sur la **figure 6**, une valeur d'un indicateur de contrôle IC égale au rapport R₃₄ = C₃₄ / A₃₄ permet d'en déduire une estimation de la fréquence d'utilisation de la carte 4 pour effectuer des transactions le mardi entre 13h et 14h. Si la valeur du compteur A₃₄ est égale à douze et si la valeur du compteur C₃₄ est égale à six, il en résulte que la valeur de l'indicateur de contrôle correspondant sera égale à 0,5, ce qui indique une fréquence d'utilisation plus importante de la carte 4 le mardi entre 13h et 14h que sur une plage temporelle Iₙ dont la valeur du compteur Cₙ serait inférieure à six.

On comprendra que toute combinaison mathématique d'une première information d'utilisation IU1, d'une deuxième information d'utilisation IU2 et/ou d'un compteur Cₙ enregistré(e)(s) dans une mémoire sécurisée 10 de la carte 4 peut avantageusement être utilisée pour en déduire des informations sur les habitudes d'utilisation de ladite carte 4.

Selon on mode de réalisation de l'invention, l'étape ED de calcul peut être mise en oeuvre uniquement lorsque certaines conditions prédéterminées sont remplies. Ces conditions prédéterminées peuvent être enregistrées dans la mémoire sécurisée 10 de la carte 4. Par exemple, il est envisageable de mettre en place un mécanisme de contrôle des habitudes d'utilisation de la carte 4 lorsque le nombre de couples tₘ enregistrés dans la première liste L1 et comprenant une valeur identique de la première information IU1 d'utilisation est supérieur à un nombre prédéterminé choisi parmi 3, 4, 5, ou 6. Lorsque ladite première information d'utilisation IU1 est une donnée d'identification MN d'un terminal externe 2, il est ainsi possible de contrôler les habitudes d'utilisation de la carte 4 uniquement lorsqu'un nombre suffisant de transactions a été effectué avec ce terminal externe 2.

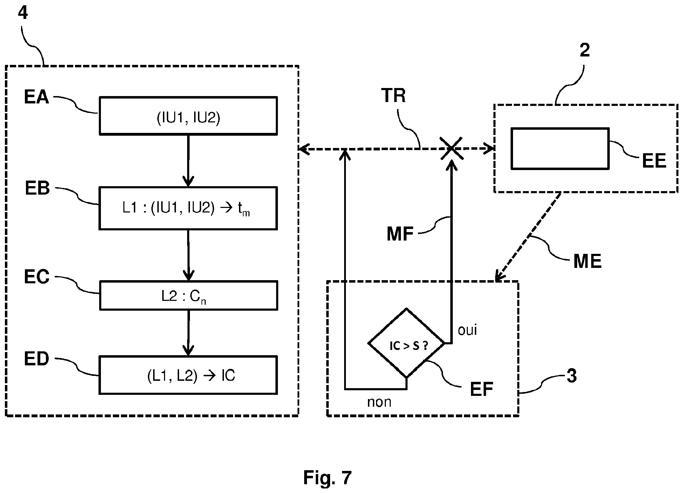

La **figure 7** représente, sous forme d'organigramme, des étapes d'un procédé de contrôle d'habitudes d'utilisation d'une carte à puce, selon un mode de réalisation de l'invention.

Selon un mode de réalisation de l'invention, et successivement à l'étape ED de calcul, des étapes supplémentaires peuvent être mises en oeuvre lorsque la transaction TR est réalisée en mode en ligne, c'est-à-dire lorsque ladite transaction TR est effectuée entre une carte à puce 4 et un terminal externe 2 connecté à un serveur bancaire 3.

Parmi ces étapes supplémentaires, une étape EE d'envoi de l'indicateur de contrôle IC peut être effectuée vers un serveur bancaire 3. Cette étape EE d'envoi peut être mise en oeuvre par la carte 4 et/ou par le terminal externe 2 à l'aide de moyens d'envoi, par exemple un message de contrôle ME. Ces moyens d'envoi sont sécurisés et peuvent comporter une connexion filaire par exemple de type Ethernet ou CPL, une connexion sans fil par exemple de type WiFi ou Bluetooth, ou tout autre type de connexion pouvant varier selon le matériel préféré pour la mise en oeuvre de l'invention.

Selon un mode de réalisation de l'invention, le serveur bancaire 3 reçoit l'indicateur de contrôle IC et effectue une analyse de sa valeur pour en déduire des informations sur les habitudes d'utilisation de la carte 4. Cette analyse en mode en ligne permet de rendre plus performant et plus rapide le contrôle d'habitudes d'utilisation de la carte 4 à l'aide de moyens d'analyse externes à ladite carte 4 et au terminal externe 2.

En outre, une étape d'annulation EF de la transaction TR peut être mise en oeuvre par le serveur bancaire 3 pour annuler ladite transaction lorsqu'une ou plusieurs conditions sont remplies. Selon un mode de réalisation de l'invention, un message d'annulation MF est émis par le serveur bancaire 3 lorsque la valeur de l'indicateur IC est supérieure à un seuil S prédéterminé.

Un homme du métier comprendra que les modes de réalisation et variantes décrits ci-avant ne constituent que des exemples non limitatifs de mise en oeuvre de l'invention. En particulier, l'homme du métier pourra envisager une quelconque combinaison des variantes et modes de réalisation décrits ci-avant afin de répondre à un besoin bien particulier.

## Revendications

1. Procédé de contrôle d'habitudes d'utilisation d'un dispositif électronique (4) comprenant une mémoire sécurisée (10), ledit procédé comprenant:
a) une étape (EA) de lecture d'une première (IU1) et d'une deuxième (IU2) information d'utilisation lorsqu'une transaction (TR) est effectuée entre ledit dispositif électronique (4) et un terminal externe (2) ;
b) une première étape (EB) d'enregistrement, dans ladite mémoire sécurisée (10) du dispositif électronique (4), d'une première liste (L1) de couples (tₘ) de données, chacun desdits couples (tₘ) comprenant ladite première (IU1) et ladite deuxième (IU2) information d'utilisation ;
- c) une deuxième étape (EC) d'enregistrement, dans la mémoire sécurisée (10) du dispositif électronique (4), d'une deuxième liste (L2) de compteurs (Cₙ) ;
- d) une étape (ED) de calcul d'au moins un indicateur (IC) de contrôle d'habitudes d'utilisation du dispositif électronique (4) au moins à partir de la première information d'utilisation (IU1), de la deuxième information d'utilisation (IU2), et/ou d'un compteur (Cₙ) de ladite deuxième liste (L2).

2. Procédé selon la revendication 1, **caractérisé en ce que** la première (IU1) information d'utilisation est une donnée d'identification (MN) du terminal externe (2).

3. Procédé selon l'une quelconque des revendications précédentes, **caractérisé en ce que** la première étape (EB) d'enregistrement enregistre uniquement la deuxième (IU2) information d'utilisation dans la première liste (L1) de couples (tₘ) de données si la première (IU1) information d'utilisation est comprise dans l'un desdits couples (tₘ) préalablement à l'étape (EA) de lecture.

4. Procédé selon l'une quelconque des revendications précédentes, **caractérisé en ce que** l'étape (ED) de calcul est mise en oeuvre lorsque le nombre de couples (tₘ) enregistrés dans la première liste (L1) et comprenant une valeur identique de la première information (IU1) d'utilisation est supérieur à un nombre prédéterminé choisi parmi : 3, 4, 5, 6.

5. Procédé selon l'une quelconque des revendications 1 à 4, **caractérisé en ce que** ladite deuxième (IU2) information d'utilisation est une information séquentielle.

6. Procédé selon l'une quelconque des revendications 1 à 4, **caractérisé en ce que** ladite deuxième (IU2) information d'utilisation est une information temporelle comprise dans une plage temporelle (Iₙ) prédéterminée.

7. Procédé selon l'une quelconque des revendications précédentes, **caractérisé en ce que** lesdits compteurs (Cₙ) sont choisis parmi : un compteur de transaction compteur de transaction d'application ATC et un accumulateur de transaction d'une plage temporelle (Iₙ) prédéterminée du dispositif électronique (4).

8. Procédé selon l'une quelconque des revendications 6 à 7, **caractérisé en ce que** la plage temporelle (Iₙ) prédéterminée est une plage horaire d'un jour de la semaine.

9. Procédé selon l'une quelconque des revendications précédentes, **caractérisé en ce que** l'étape (ED) de calcul calcule une valeur dudit indicateur (IC) de contrôle, ladite valeur étant choisie parmi :
- une première (IU1) information d'utilisation d'au moins un couple (tₘ) enregistré dans la première liste (L1) ;
- une deuxième (IU2) information d'utilisation d'au moins un couple (tₘ) enregistré dans la première liste (L1) ;
- une valeur courante d'au moins un desdits compteurs (Cₙ) enregistrés dans la deuxième liste (L2) ;
- une différence (Dₙ) entre une valeur courante d'au moins un desdits compteurs (Cₙ) de la deuxième liste (L2) et une valeur courante d'un compteur de transaction d'application ATC du dispositif électronique (4) ;
- une estimation d'au moins un rapport (Rₙ) entre une valeur courante d'un compteur de transaction d'application ATC du dispositif électronique (4) et d'au moins un desdits compteurs (Cₙ) de la deuxième liste (L2).

10. Procédé selon l'une quelconque des revendications précédentes, **caractérisé en ce que** ledit procédé comprend en outre, successivement à l'étape (ED) de calcul :
- e) une étape (EE) d'envoi de l'indicateur (IC) de contrôle calculé à un serveur bancaire (3) dans un message de contrôle (ME);
- f) une étape d'annulation (EF) de la transaction (TR) par un message d'annulation (MF) émis par le serveur bancaire (3) lorsque la valeur de l'indicateur (IC) est supérieure à un seuil (S) prédéterminé.

11. Procédé selon l'une quelconque des revendications précédentes, **caractérisé en ce que** la transaction (TR) est conforme au protocole EMV.

12. Programme d'ordinateur (PG1) comportant des instructions pour l'exécution des étapes d'un procédé selon l'une quelconque des revendications précédentes lorsque ledit programme est exécuté par le dispositif électronique (4).

13. Support d'enregistrement (10) lisible par un microprocesseur (5) sur lequel est enregistré un programme d'ordinateur (PG1) comprenant des instructions pour l'exécution des étapes d'un procédé selon l'une quelconque des revendications précédentes.

14. Dispositif électronique (4) comprenant :
- un module (MA) de lecture programmé pour lire une première (IU1) et une deuxième (IU2) information d'utilisation lorsqu'une transaction (TR) est effectuée entre ledit dispositif électronique (4) et un terminal externe (2) ;
- une mémoire sécurisée (10) comprenant :
∘ un premier module (MB) d'enregistrement, pour enregistrer une première liste (L1) de couples (tₘ) de données, chacun desdits couples (tₘ) comprenant ladite première (IU1) et ladite deuxième (IU2) information d'utilisation ;
∘ un deuxième module (MC) d'enregistrement pour enregistrer une deuxième liste (L2) de compteurs (Cₙ) ;
- un module (MD) de calcul programmé pour calculer au moins un indicateur (IC) de contrôle d'habitudes d'utilisation du dispositif électronique (4), au moins à partir de la première information d'utilisation, de la deuxième information d'utilisation et/ou d'un compteur (Cₙ) de ladite deuxième (L2) liste.

15. Dispositif électronique (4) selon la revendication 14, **caractérisé en ce que** le dispositif électronique (4) est une carte à puce.
